# EUROPEAN PATENT SPECIFICATION

(11) **EP 4 532 428 B1**
(45) Date of publication and mention of the grant of the patent: **25.11.2026**
(21) Application number: 23734072.4
(22) Date of filing: 25.05.2023
(51) Int. Cl.: C02F 1/44, C02F 1/28, B01D 27/14, B01D 27/08, B01D 37/02, B01D 27/06

(54) **REGENERABLE FILTER FOR THE FILTRATION OF WATER AND CORRESPONDING WATER FILTRATION SYSTEM OPERATING IN A CONTEXT OF CIRCULAR ECONOMY**
REGENERIERBARES FILTER ZUR FILTRATION VON WASSER UND ENTSPRECHENDES WASSERFILTERSYSTEM IM RAHMEN DER KREISÖKONOMIE
FILTRE RÉGÉNÉRABLE POUR LA FILTRATION D'EAU ET SYSTÈME DE FILTRATION D'EAU CORRESPONDANT FONCTIONNANT DANS UN CONTEXTE D'ÉCONOMIE CIRCULAIRE

(30) Priority: 27.05.2022 IT 202200011309
(43) Date of publication of application: 09.04.2025
(73) Proprietor: Simoncello, Giovanni, 13894 Gaglianico (BI) (IT); Bentivogli, Claudio, 48011 Alfonsine (RA) (IT); Frigerio, Giacomo, 22030 Castelmarte (CO) (IT)
(72) Inventor: SIMONCELLO, Giovanni, 13856 Vigliano Biellese (BI) (IT); BENTIVOGLI, Claudio, 48011 Alfonsine (RA) (IT)
(86) International application number: PCT/IT2023/050133
(87) International publication number: WO 2023/228226

(56) References cited:
- EP-A1- 2 692 696
- US-A1- 2003 222 010
- US-A1- 2007 119 766

## Description

### Field of the invention

The present invention relates in general to the field of filtration or filtering of water, typically drinking water, and more particularly it relates to a new and innovative filter, which can be regenerated, comprising a significant number of parts which can advantageously be reused and recycled, after the use of the filter and once its filtering capacity has been exhausted, in order to regenerate it so that it can continue to be used to filter the water.

In this way, the filter of the invention, thanks to its advantageous regenerability, appears able to meet the current and modern expectations and ecological requirements of industry and civil society toward devices and equipments that respect the environment in which we live, whereby they are not a source of environmental pollution and therefore generate a low quantity of waste and materials and a limited number of parts to be disposed of, unlike in particular the so-called "disposable" water filters, which are currently available and offered on the market, that after use must be totally and completely disposed of, together with all the various materials and parts of which they are made, and therefore can create serious environmental pollution problems.

The present invention also relates to a corresponding water filtration system, including as an essential part the regenerable filter previously briefly illustrated, wherein this water filtration system is properly framed and inserted into a wider concept and circular economy system.

### Background of the invention and state of the prior art

The relevant prior art, to be considered and related to the present invention, comprises first of all the so-called Pre-Coat filtering technology developed by the company Everpure in the 1930s to allow large volumes of drinking water to be economically, simply and effectively filtered and treated.

In particular, this Pre-Coat filtering system or technology for drinking water provides, as an essential element, a corresponding Pre-Coat filter comprising a double membrane, in the form of a pocket, exhibiting a large contact and filtration surface, which is housed in a container containing a mass of activated carbon powder continuously moving in the water to be filtered.

In the use of this Pre-Coat filter, part of the activated carbon powder is deposited on the outer surface of the membrane, which retains it, preventing it from circulating.

At the same time, the surface of the membrane, filled with activated carbon powder, performs a filtering function not only mechanical, but also chemical-physical, absorbing the undesired substances present in the water flowing in the filter.

This Pre-Coat filtering technology, based, as mentioned above, on adoption and use, to filter water, of a large filtration surface microfiltration membrane associated with a powdered mass of activated carbon, has been imposed and has been highly successful in the market and industry, and it continues to be widely applied for its effectiveness and convenience to filter drinking water in a variety of applications.

Today, however, the problem arises, no longer unavoidable and negligible as in the past, of adapting and adapting this Pre-Coat filtering technology, which already has a long history behind it, to the new and modern industrial requirements and expectations of civil society, in particular of ecological and environmental type.

In particular, it is currently evident the need to be able to dispose in the industry and in the market of ecological filters, or filters having a reduced environmental impact and therefore involving, after their use and once their autonomy and filtering capacity have been exhausted, a small amount of materials and waste and a small number of parts to be disposed of in the environment.

In addition to the above Pre-Coat filtration technology, the following other technologies, currently used in industry and the market order to filter drinking water, are cited for completeness in:
- carbon block compacted activated carbon;
- GAC (Granular Activated Carbon);
- melt blown polypropylene depth filtration;
- depth filtration with wound synthetic thread;
- surface filtration with membrane or synthetic or metallic net;
- chemical/physical treatment with ion exchange resins;
- ultrafiltration with membrane or hollow fibers.

However, these further filtering technologies also pose the problem of adapting and being compatible, in their practical applications, for example in the manufacture of filters which exploit these technologies, with the current ecological and environmental requirements.

In the field of the prior art, there are also mentioned the patent rights in the name of the English company ICON TECHNOLOGY SYSTEMS LTD, and in particular the respective European patent application EP 2 536 477, in turn corresponding to the international patent application PCT/GB2011/050095 published as WO 2011/101652 A2 on August 25, 2011, which relates to a filter, which can be recycled, in the form of a cartridge, for filtering drinking water.

However, also the recyclable filter, known from this European patent application EP 2 536 477, though in some way tackling the problem, in line with the current ecological and environmental requirements, of being regenerable and therefore of implying, after use, a reduced quantity of materials to be disposed of, is still susceptible to further improvements, again in order to limit and reduce as much as possible the impact on the environment resulting from the use of these filters to filter drinking water.

For the sake of completeness of information, there are also mentioned the following patent documents which have emerged from a specific research in the technical field in which the regenerable filter object of the present invention is located: i.e. WO 2021/104708 A1, CN 212594421 U, WO 2021/013581 A1, US 10,765,973 B2, CN 209809692 U, WO 2019/055560 A1, WO 2018/158579 A1, US 9,769,424 B2, WO 2015/107349 A2, KR20000034061 A, WO 2011/101652 A2, US 2006/0151376 A1, WO 2006/055710 A2, US 2004/0206685 A1, US 3,955,503, US 2,347,184.

In this case too, however, the filters, the systems for water filtering and in general the solutions and embodiments described by these patent documents are not free from limits and drawbacks, so as to require to be further improved, in particular in the direction of involving, at the end of their use, an environmental impact which is as small as possible, and in particular a minimum quantity of materials to be disposed of.

It is also noted, in order to provide a complete picture as possible of the prior art, that many of the known filtering devices and systems currently offered and available on the market provide for the use of filtering cartridges containing disposable filtering means, that is means which are not reusable and therefore are necessarily intended to be disposed of in some way after their use, whereby these filtering cartridges are not regenerable.

It follows that these filtering cartridges, currently offered on the market, after use and exhaustion of their autonomy and filtering capacity must necessarily be disposed of in their entirety, i.e. without the possibility of recovering any of their parts, together with the filtering means contained therein, so as to potentially cause environmental pollution.

Therefore, also in this case, the problem arises of reducing the environmental pollution caused by the use of these non-regenerable filter cartridges containing disposable filter means.

For the sake of completeness, there are also cited patent documents EP 2 692 696 A1, US 2007/119766 A1 and US 2003/222010 A1.

In particular, the patent document EP 2 692 696 A1 describes a refrigerated filter, for the treatment of water fed from a water mains, comprising: an external container body containing masses and materials, in particular in powder form, mixed together, having the ability to treat and filter water, with this external container having an inlet for non treated water and an outlet for treated water; a water microfiltration system having a filter pocket made with one or more layers of filter membranes; and a treated water refrigeration system.

This filter, in addition to comprising a water refrigeration system operating during use of the filter to treat and filter the water and therefore implying significant operating costs associated with its operation, has the drawback that the filter pocket with the membranes filters and the dusty masses are contained in the external container body of the filter.

Consequently, when the filter, once exhausted, is disassembled and opened to be regenerated, both the filter pocket and the dusty masses are difficult to manage and can be dispersed into the environment with the risk of polluting it, thus generating special waste.

Furthermore, the parts of the filter that must be removed and replaced with new parts, during the regeneration phase of the filter, once it has exhausted its filtering capacity, in order to make it active again, are numerous and expensive and not limited solely to the dusty filtering masses and to the exhausted filter pocket.

The patent document US 2007/119766 A1 in turn describes a recyclable filtering unit for liquids, comprising an external vessel capable of withstanding high pressures acting inside it, and a recyclable and removable filtering cartridge, housed in the external vessel, wherein this filtering cartridge comprises an inlet body for receiving the fluid to be filtered and a filter medium in turn formed by three different types of filter media, arranged in series, which receive the liquid for filtering it as it flows through the filter cartridge, and wherein the filter assembly further includes a quick disassembly mechanism to allow quick and non-destructive access to the internal components and filter media contained in the filtering cartridge.

However, even the filter known from this patent document is not free from limitations and drawbacks, and in particular presents, in the phase of removing the filtering cartridge from the filter, once exhausted, and replacing it with a new filtering cartridge, the risk of dispersing the filter medium contained in the filter cartridge into the environment with the consequent production of special waste.

Furthermore, also in the case of this filter, during its regeneration phase, once exhausted, it is necessary to replace the filtering cartridge, in its entirety, i.e. with all its parts, and not only the disposable filter media included in this filtering cartridge .

Again, the liquid filtration methods, as described in a very general way by this patent document, by means of a series of different filtering media but without the use of a microfiltering membrane, do not always appear capable of obtaining the desired filtration quality in the liquid which is treated by the filter.

Even the filter cartridge, for filtering a liquid, which is described by the patent document US 2003/222010 A1, is not free from limitations and drawbacks, and in particular that of requiring, when exhausted, the replacement of some of its relevant and expensive parts, such as a bag containing the liquid filtering medium, so as to make the replacement of this filter cartridge particularly onerous and expensive, once it has exhausted its filtering capacity, with a new active cartridge, as well as to produce further environmental pollution.

A further requirement, which is currently felt in the field of filtering devices and systems and in particular those using disposable filtering means, i.e. filtering means which, as illustrated above, once their filtering capacity has been exhausted as a result of use, must necessarily be removed and replaced with new and intact filtering means, it is also that of making this removal and replacement operation as easy and comfortable as possible by a user.

Unfortunately, it is noted that, in many filtration systems currently in use in industry and the market, the removal and replacement of the filtering means, once exhausted, is not an easy operation and often requires complicated manoeuvres and operations by a user, with the consequent production of special waste that is difficult and expensive to manage.

There is also felt in the market the expectation and the need for filtering systems and devices, in particular for filtering drinking water, which, in addition to be able to meet the ecological and environmental requirements, as already illustrated, are also such as to involve simple and easy maintenance in order to keep them constantly in order and in efficiency.

Therefore, in the context as illustrated above and the various problems posed therein, apparently unresolved or at least solved in a not entirely satisfactory manner, the inventors of the present invention have perceived that it was possible to go beyond the prior art, that is to improve the filters and in general the drinking water filtering systems, currently available and offered on the market, in particular those of the type using disposable filtering means, i.e. removable and replaceable after use with new and intact filtering means, in the direction of making safer, convenient and efficient the removal and replacement of these disposable filtering means, as well as in that of reducing as much as possible the environmental impact resulting from the use of these filters and water filtering systems.

### Objects and summary of the invention

It follows that a first object of the present invention is to propose and provide a new and useful filter for filtering water, in particular of the type using disposable filtering means, such as for example a disposable filtering membrane, that, therefore, after use and once their autonomy and filtering capacity have been exhausted, must necessarily be replaced with new and intact disposable filtering means, wherein this new filter allows to remove from the filter and to replace these disposable filtering means efficiently, comfortably and safely, once exhausted after use.

Moreover, a second object, not secondary and associated with the first one, of the present invention, is also that of providing a new and useful filter, for filtering water, again of the type using disposable filtering means, i.e. intended to be replaced after use, able to meet the ever more pressing current ecological expectations, also in the field of water filtration, toward apparatuses, devices and systems for filtering water that respect the environment in which we live and in particular allow to reduce as much as possible the quantity of material and the number of parts to be disposed of after the use of these disposable filtering means, so as to limit the environmental pollution, and therefore to offer a cleaner and greener alternative to water filters, currently offered and used in the market, of the "disposable" type, whose filtering cartridges containing the disposable filter media are not regenerable but must be disposed of integrally together with the same disposable filter media and therefore potentially cause environmental pollution.

Yet another third object of the present invention is to provide and propose in the market a new filter for the filtration of water, based on the known, widely tested and effective Pre-Coat filtering technology, which is such as to adapt to the current technical evolution in this field of water filtration and in particular is capable of responding to and meeting the modern industrial requirements and expectations of civil society, in particular of ecological and environmental type.

A further fourth object of the invention is that of realizing a filter which can guarantee, during the maintenance and replacement operations of the disposable filter medium, the highest standards of hygiene and preservation of the same filter medium from microbiological contamination.

A further fifth object of the invention is that of realizing a filter having a configuration such as to allow easy and effective emptying of the water which is contained in the disposable filter medium included in the filter, once it has exhausted its filtering capacity, so to lighten this disposable filter medium and make it suitable to be eventually transferred to the regeneration or disposal sites.

Yet another sixth object of the filter of the invention is to provide a filter, whose disposable filter medium, whatever the filtration technology adopted, once its autonomy and filtering capacity is exhausted, can be easily removed and replaced without dispersions in the environment of the components that implement this filtration technology, and therefore without generating dangerous special waste.

The above objects can be considered fully achieved by the regenerable filter, for filtering water and in general a drinkable liquid, having the characteristics recited by the independent main claim 1, and by the corresponding system for the filtration of drinking water having the characteristics recited by claim 2.

Particular embodiments of the regenerable filter and of the corresponding water filtering system, according to the invention, are further defined by the dependent claims.

As described in detail below, the regenerable filter, object of the present invention, of which a next promotion and offered in the market under the trade name "FILTEVER" is envisaged, comprises, as an essential part, a consumable component consisting of a filter cartridge with a respective container housing a filter apparatus configured to filter water based on a given filtration technology, such as for example but not exclusively the so-called Pre-Coat filtration technology, in which this container is reusable, after use and exhaustion of the filter capacity of the cartridge, in order to regenerate the filter.

In particular, the filtering apparatus, included in the filtering cartridge, if it is configured to operate with the Pre-Coat technology, while still pointing out that other known filtering technologies are applicable, comprises a waterproof and impermeable bag and a filtering medium, contained in the impermeable bag, consisting of a single-use microfiltration membrane with a large filtering surface associated with and cooperating with a dusty filtering mass of activated carbon, wherein, advantageously, the filter can be regenerated, after the exhaustion of its autonomy and filtering capacity, by replacing only the single-use microfiltration membrane contained in the impermeable bag, together with the dusty filtering mass of activated carbon.

### Advantages of the invention

As it will become clear from the following description, both the new regenerable filter and the corresponding water filtration system, according to the present invention, provided for being promoted in the market under the FILTEVER brand, offer a series of relevant and unique advantages, some of which have already been previously announced, among which the following are mentioned purely by way of example:
- full compliance and compatibility of the regenerable filter of the invention with the current ecological and environmental expectations toward a circular economy involving the lowest possible quantity of materials and a small as possible number of parts to be disposed of, after their use, as well as the maximum reuse of materials and parts disposed of;
- the ability to advantageously combine the known Pre-Coat filtering technology, developed by Everpure in the 1930s, based on the use of a single-use microfiltration membrane with a large filtration surface associated with activated carbon in powder form, with the current and modern environmental and ecological expectations toward regenerable and recyclable filters such as to involve a reduced quantity of materials and waste and a reduced number of parts to be disposed of after use of the filter;
- regeneration of the filter, when based both on the Pre-Coat filtration technology and on the other known filtration technologies, once its filtration capacity has been exhausted, by the only replacement in the filter of the disposable microfiltration membrane and of the dusty activated carbon filtering mass associated with this disposable microfiltration membrane;
- easy maintenance of the filter cartridge, in particular to remove, in case the filter applies the Pre-Coat filtration technology, the respective disposable microfilter membrane and the dusty mass of activated carbon, once exhausted, housed and contained in the same filter cartridge, and to replace them with a microfiltration membrane and a dusty mass of activated carbon, both new;
- easy maintenance of the filter cartridge while maintaining the highest standards of hygiene and preservation of the filter medium itself from microbiological contamination,
- easy and effective emptying of the water contained in the disposable filter medium, once its filtering capacity is exhausted, so as to make it lighter and more suitable for being eventually transferred to regeneration or disposal sites;
- easy maintenance of the filter cartridge, whatever the filtration technology it adopts, without dispersing the components that implement this filtration technology into the environment and therefore without generating dangerous special waste.
- compatibility of the filtering cartridge, included in the regenerable filter of the invention, with the filter heads, connected to the water supply mains, of the filters currently offered on the market, so as to allow to update these existing and already in use filters;
- a competitive cost with the filters and filtering systems for water currently available on the market;
- full compatibility of the filter of the invention with a wider context and system of circular economy directed to have a minimum environmental impact;
- reduction of transport costs on rubber, ship, aircraft of the materials and components necessary for the regeneration of the filtration systems (Pre-Coat, GAC granular carbon systems, ion exchange resin systems, etc.), thanks to the weight reduction, by adopting the FILTEVER filtration system, of these materials and components which are transported, with a resulting reduction in C02 emissions into the atmosphere.

### Brief description of the drawings

These and other objects, features and advantages of the present invention will become apparent from the following description of a preferred embodiment thereof, given purely by way of non-limiting example with reference to the attached drawings, wherein:
Fig. 1 is a perspective view of a regenerable filter, in assembled form, for the filtration of drinking water, according to the present invention;
Fig. 2 is a perspective view of the regenerable filter of Fig. 1, in disassembled form and broken down into its essential parts;
Fig. 3, divided into sections (a) and (b), is a perspective view of a filter-holder head and of a consumable component, associated with the filter-holder head, consisting of a filtering cartridge, included in the regenerable filter of the invention of Figs. 1 and 2;
Fig. 4, divided into sections (a)-(b), is a perspective view of a filtering apparatus, which applies the Pre-Coat filtration technology, of the regenerable filter of the invention of Figs. 1 and 2, and in particular of a respective filtering membrane which retains a dusty mass of activated carbon, and of a respective impermeable bag which houses the microfiltration membrane and contains the dusty mass of activated carbon;
Fig. 5 is a longitudinal sectional view of the regenerable filter of the invention of Figs. 1 and 2;
Fig. 5A is a view showing an enlarged scale of a zone indicated by a dashed and dotted circle in Fig. 5;

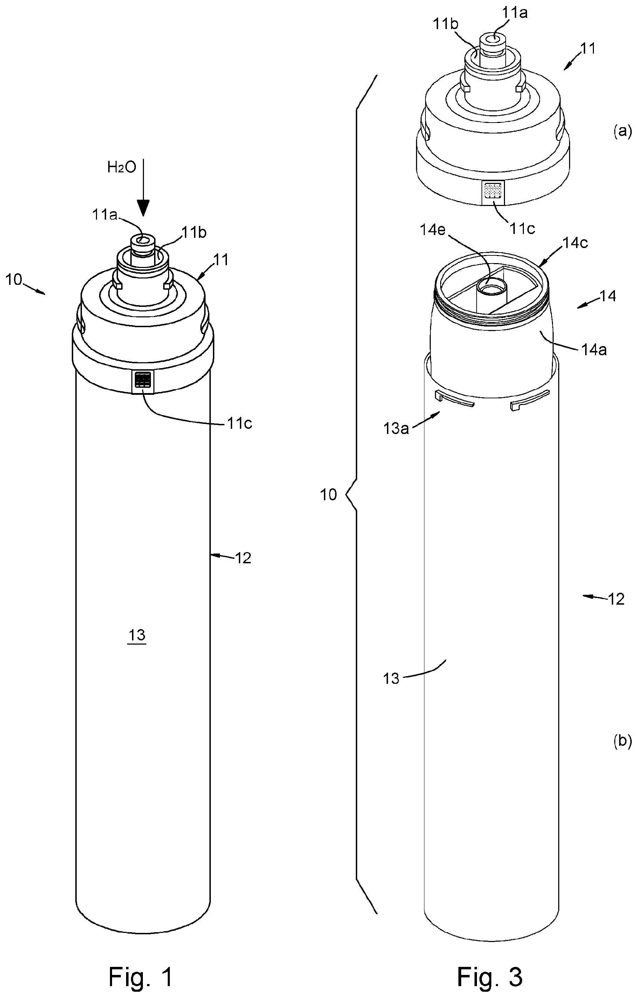

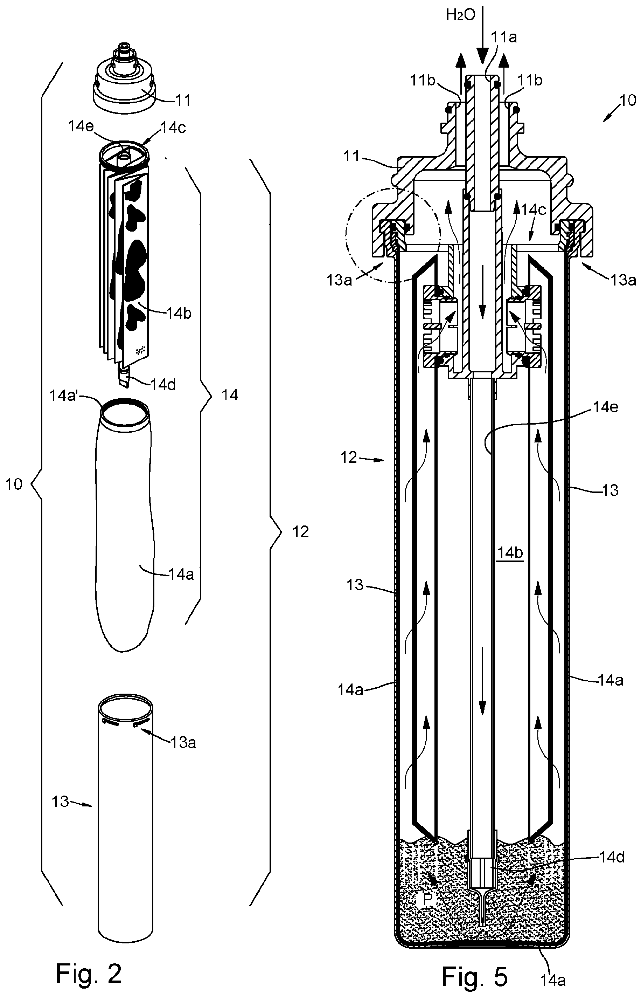

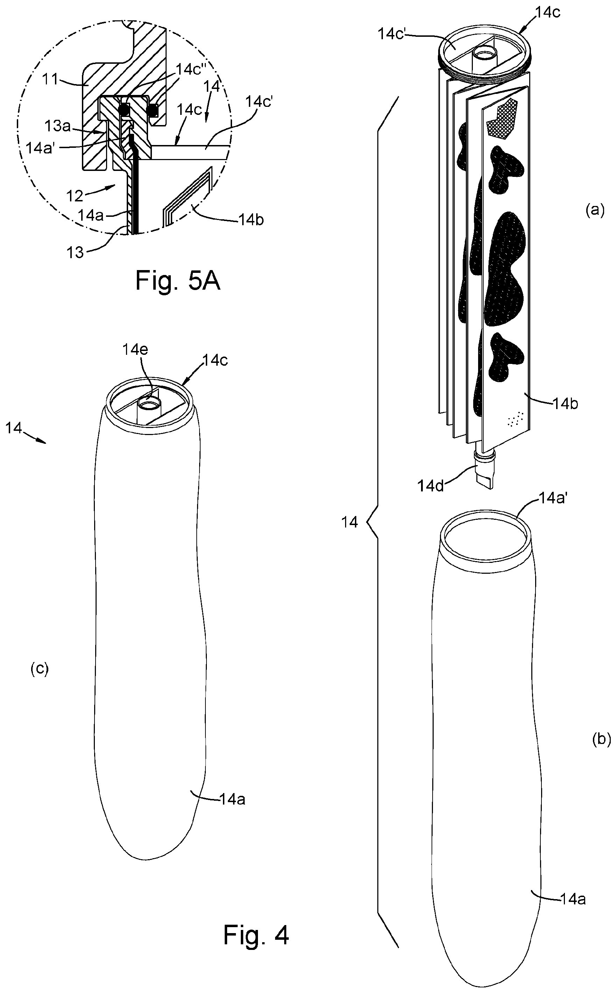

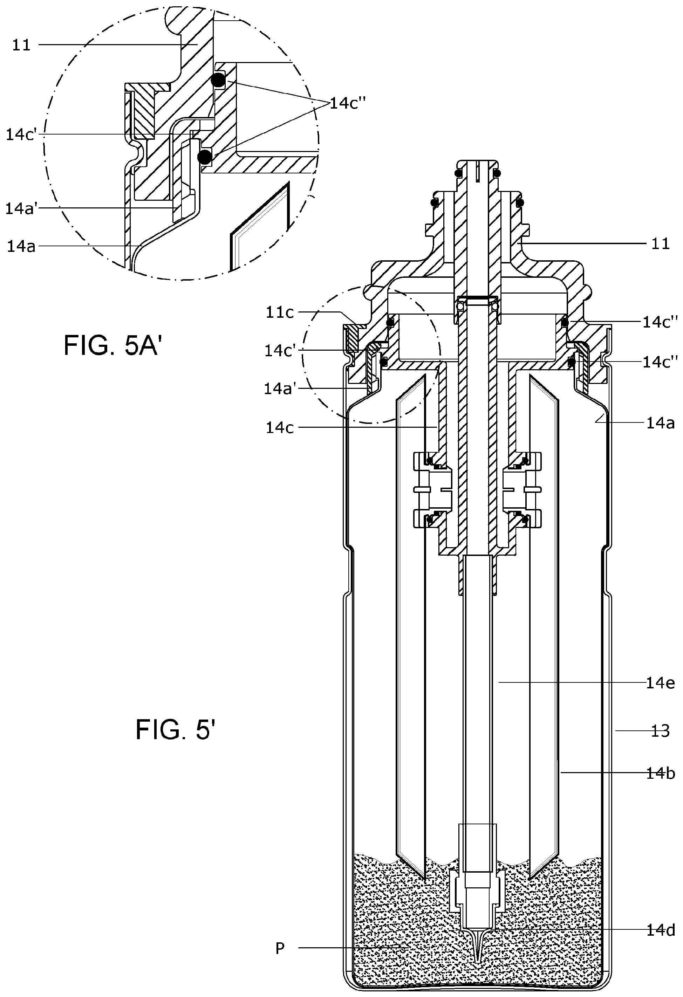

Fig. 5' is a longitudinal sectional view of a variant of the regenerable filter of the invention of Figs. 1 and 2;
Fig. 5A' is a view showing on an enlarged scale an area, indicated by a dashed and dotted circle, of the variant of Fig. 5'

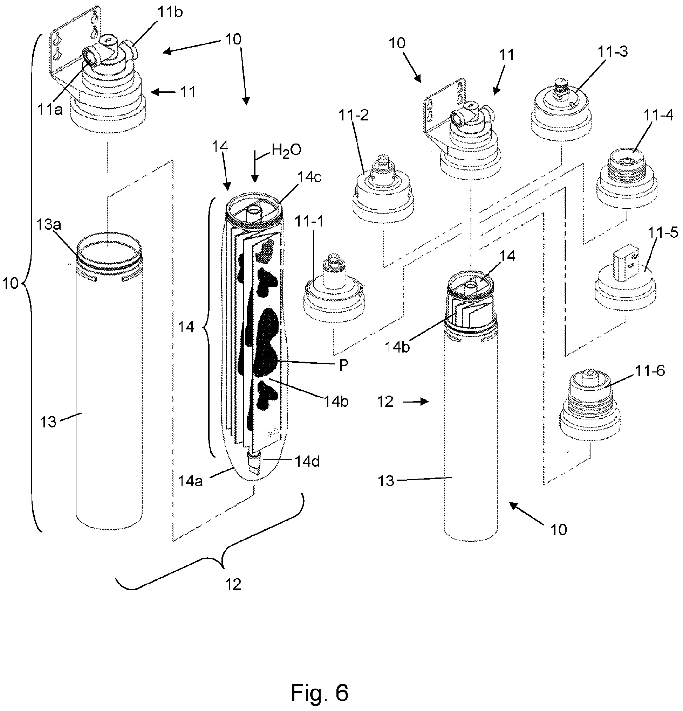

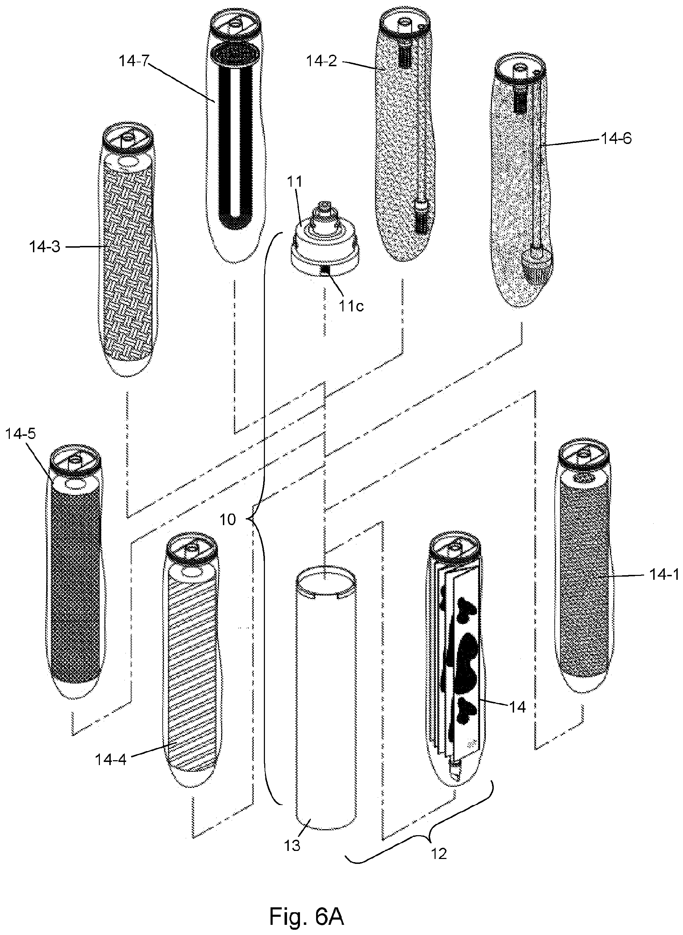

Fig. 6 is a perspective view showing the fundamental parts of the regenerable filter of the invention, when applying the Pre-Coat filtration technology, and its compatibility with the filter-holder heads of other water filtration systems and devices currently in use on the market;
Fig. 6a is a diagram showing in perspective the regenerable filter of the invention, whereas it applies various filtering technologies in addition to the Pre-Coat one; and

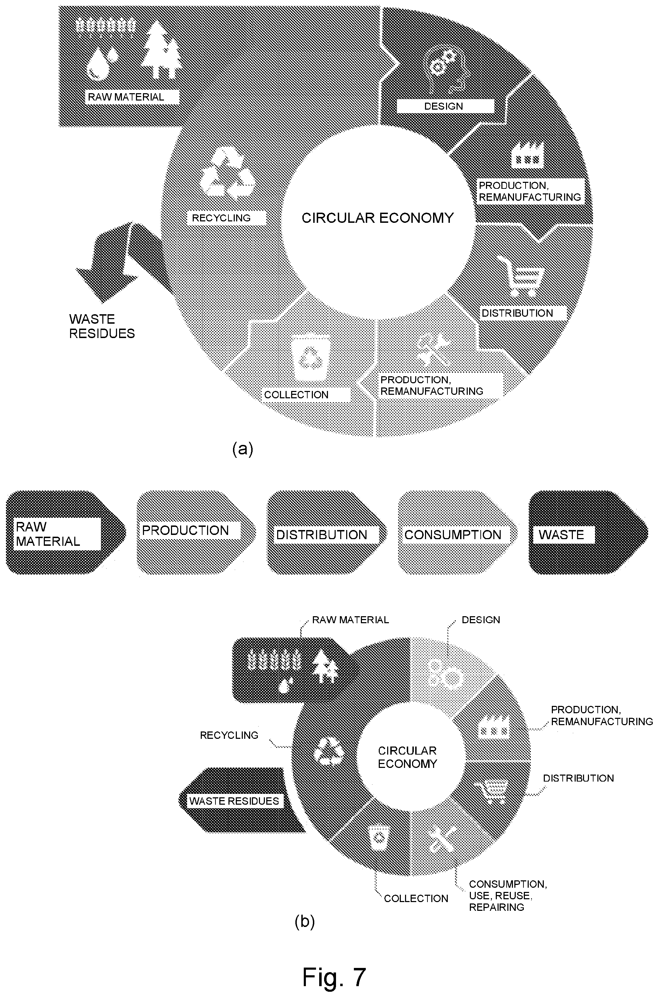

Fig. 7 is a diagram illustrating a circular economy concept in which the regenerable filter of the invention for water filtration and the corresponding filtration system are to be framed and referred.

For the sake of completeness, it should be noted that, in the following description of the invention, the reference to a specific embodiment and application thereof does not exclude that a particular configuration, structure or characteristic, structural or operative, described in connection with such a specific embodiment and application, may also be included in other embodiments and applications of the same invention, in which for synthesis reasons it has not been described.

It follows that particular configurations, structures, phases, characteristics, both structural and functional, of the invention, can be combined in any suitable and coherent manner in one or more embodiments and applications.

It should also be noted that the reference numerals used in the description and the drawings only meet requirements of convenience and therefore do not in any way define the scope of the embodiments and applications, which will be described, of the invention.

### Description of a preferred embodiment of the regenerable filter and of the corresponding system, according to the invention, for filtering water

With reference to the drawings, and in particular to Figs. 1, 2 and 5, a regenerable filter, according to the present invention, in particular but not exclusively for the filtration of drinking water, provided for being offered and recognized on the market under the trade name "FILTEVER", is indicated as a whole by 10 and comprises:
- a filter-holder head 11, configured to be permanently connected to an external water supply means or network, indicated by its chemical formula H₂O, or to similar water supply means; and
- a consumable component, associated and removably connectable with the filter-holding head 11, consisting of a filter or filtering cartridge 12;
wherein the filter-holder head 11 in turn comprises an inlet 11 a for receiving from the external supply network the water H₂0 to be filtered and an outlet 11 b for delivering the water H₂0, once filtered through the filtering cartridge 12, to a user.

The filter cartridge 12, an essential part of the filter 10, in turn comprises:
- a container body 13, substantially cylindrical, cup-shaped, in particular of stainless steel, aluminium or plastic material, provided at one end with a quick coupling 13a, hermetically sealed, to quickly and removably attach and connect the filter cartridge 12 to the filter-holding head 11; and
- a filter or filtering apparatus 14, housed in the container body 13, adapted to filter the water supplied by the supply mains outside the filter 10;
wherein the filter apparatus 14, included in the filter cartridge 12, is configured to filter water with a filter or filtering medium 14b based on a given filtration technology.

A slide push-button, fork shaped, denoted by 11c, associated with the filter-holder head 11 and provided to be operated manually by a user, has the function of locking and unlocking the rotation of the container body 13 of the filter cartridge 12 with respect to the filter-holder head 11, so as to allow to remove and disconnect from the latter the consumable component, i.e. the filter cartridge 12, in order to regenerate the filter 10, as described in greater detail hereinafter.

According to a salient feature of the present invention, the container body 13 of the filter cartridge 12 is totally reusable after the use of the same filter cartridge 12, that is once the filtering medium 14b of the filtering apparatus 14 included in the filter cartridge 12 has exhausted its autonomy and filtering capacity, to receive and house a new filtering apparatus with a respective new filtering means, integral, in order to regenerate the filter 10, so that it can continue to be used to filter the water H₂0 fed by the external water mains.

Therefore, thanks to this configuration, the filter 10 of the invention is able to be regenerated in an environmentally friendly manner and in respect of the environment with a minimum quantity of materials and a minimum number of parts to be disposed of, since it implies, in order to regenerate the filter 10 after the use of the filter cartridge 12 and the exhaustion of its filtration capacity, only the replacement of the exhausted filter medium 14b of the filter apparatus 14 included in the filter cartridge 12, with a new and intact filter medium.

Still according to a salient feature of the present invention, the filtering apparatus 14, included in the filtering cartridge 12, is preferably, though not exclusively, configured to filter the water according to the so-called Pre-Coat filtration technology already illustrated above.

In this case the filtering apparatus 14, included in the filtering cartridge 12 of the regenerable filter 10 and housed in the respective container body 13, comprises:
- a bag or casing 14a, impermeable, tubular in shape, made of a soft and deformable material, for example plastic material or plastic material and aluminium;
- a filtering means, housed in the bag 14a, consisting of a microfiltration or microfilter membrane 14b, folded, with a large filtration surface, associated, on the basis of this Pre-Coat filtration technology, with a dusty filtering or filter mass, indicated by P, also called in the following powdery filter mass or powdered filtering mass, contained in the bag 14a, of activated carbon powder, wherein the microfilter membrane 14b and the dusty filter mass P cooperate to filter the water flowing through the regenerable filter 10;
- a connection element 14c for removably connecting the microfilter membrane 14b housed in the tubular bag 14a to the tubular bag 14a; and
- a non-return valve 14d, as specifically provided for by the regulations in force, associated with the impermeable bag 14a and connected to the connecting element 14c by means of a central duct 14e;
wherein in which this non-return valve 14d has the function of preventing the return, in the external supply network, of water H₂0 flowing in the regenerable filter 10 and in the respective filtering apparatus 14 operating on the basis of the Pre-Coat filtering technology.

In greater detail, as shown in Figure 5a, the connection element 14c includes a sealing flange 14c', made of plastic material, which can be removably and detachably coupled to a plastic ring 14a', fixed to an upper edge of the tubular bag 14a, wherein this sealing flange 14c' is associated with sealing rings 14c" suitable to allow the filtering apparatus 14, included and contained in the filtering cartridge 12, to be sealingly and removably connected to the filter-holding head 11.

The connection element 14c also acts as a support for the microfiltration membrane 14b, essential component of the Pre-Coat filtration technology, folded and having a large filtration surface, with this microfiltration membrane 14b being removably and detachably connected with respect to the same connection element 14c.

In this way, it is possible to easily remove and replace the exhausted microfilter membrane 14b with a new microfilter membrane, in order to regenerate the filter 10, as described in greater detail hereinafter.

Therefore, thanks to this configuration of the filter 10, as hereinafter illustrated in greater detail describing its operation, the filtering apparatus 14, housed in the filtering cartridge 12, is able to retain, inside the bag 14a, the dusty filtering mass P, of activated carbon, which in cooperation with the microfiltration membrane 14b has the function of filtering, according to the Pre-Coat filtration technology, the water flowing through the filter 10.

Moreover, advantageously, as already pointed out, this configuration of the filter 10 allows the removal and replacement in the latter of the microfiltration membrane 14b and of the dusty filtering mass P, of activated carbon, while preserving and reusing the impermeable bag 14a and the connection element 14c of the filtering apparatus 14, when the filtering cartridge 12, once the respective filtering capacity has been exhausted, is disconnected from the filter-holding head 11 in order to regenerate the filter 10.

### Operation and use of the regenerable filter of the invention

in the operation of the regenerable filter 10 of the invention, as indicated by arrows in Figure 5, the water H₂O to be filtered, fed by the external supply network, enters the filter-holding head 11, through the respective inlet 11a, and then accesses the filter cartridge 12, connected by means of the quick coupling 13a to the same filter-holding head 11.

Then, in the filter cartridge 12, the water H₂O to be filtered, fed by the external supply network, flows into the central duct 14e which extends along the axis of the filter 10, passes through the non-return valve 14d, and then enters the inside of the impermeable bag 14a, which houses the microfiltration membrane 14b and contains the powdery filter mass P of activated carbon, where the water is filtered by the combined and synergistic action of this microfiltration membrane 14b and this powdery filter mass P of activated carbon which retain and separate from the water, which flows into the filter 10, harmful and polluting substances so as to filter it and make it drinkable.

Then the water H₂O passes through the microfilter membrane 14b, to enter again into the filter-holder head 11, and finally exits, after having been filtered, from the filter 10, through the outlet 11b of the filter-holder head 11, to be fed to an external user, where the water H₂O filtered by the regenerable filter 10 is used.

When the microfiltration membrane 14b and the powdery filtering mass P of activated carbon, contained in the impermeable bag 14a of the filtering cartridge 12 connected to the filter-holding head 11, have exhausted their autonomy and filtration capacity, after having filtered a corresponding quantity of water fed from the external supply network, the need arises to regenerate the filter 10, i.e. to prepare it so that it can continue to be used to effectively filter the water H₂O fed to the filter 10 by the external water supply network.

Therefore, for this purpose, a user, operating with the slide button 11c, disconnects the exhausted filter cartridge 12 from the filter-holder head 11.

The same user then removes and extracts the filtering apparatus 14 from the container 13 of the filtering cartridge 12, once it has been disconnected from the filter-holding head 11.

Then the user, after having extracted from the container 13 and freed the filtering apparatus 14, releases the connection element 14c, with the microfilter membrane 14b attached, from the plastic ring 14a' of the bag 14a.

At this point the user can detach and remove the exhausted microfilter membrane 14b from the connection element 14c and replace it with a new and integral microfilter membrane 14b.

At the same time, the user removes from the bag 14a, freed from the connection element 14c and from the microfiltration membrane 14b, the dusty mass P, exhausted, of activated carbon, so as to empty the bag 14a, and then replaces in the same bag 14a the dusty mass P, exhausted, of activated carbon with a new powder mass P, integral, of activated carbon.

Once this has been done, the user again mounts the connection element 14c, with the new and integral microfiltration membrane 14b attached to it, to the plastic ring 14a' of the bag 14a, in turn containing the new and integral powdered mass P of activated carbon, so as to reconstitute the filtering apparatus 14. which is housed in the container body 13 of the filter cartridge 12.

In this way, both the microfiltration membrane 14b and the powdery filtering mass P, of activated carbon, both exhausted, are removed and replaced in the impermeable bag 14a, which is therefore stored and reused, respectively by a new microfiltration membrane 14b and a new powdered filtered mass P, of activated carbon, both of which are integral, able to filter the water destined to flow into the filter 10.

In other words, both the microfiltration membrane 14b and the powdery filtering mass P of activated carbon, contained in the bag 14a, are definitively removed from the filter 10 and disposed of, once their autonomy and filtering capacity have been exhausted, after use of the filtering cartridge 12.

Instead, the container 13 of the filter cartridge 12; the bag 14a of the filtering apparatus 14; the respective connection element 14c, able both to removably connect the microfilter membrane 14b to the bag 14a and to sealingly connect the filter cartridge 12 to the filter-holding head 11; the non-return valve 14d, and the central duct 14e of the filtering apparatus 14 which receives the water from the external supply mains, are instead kept and advantageously reused, after the use of the filtering cartridge 12, or once the respective filtering capacity has been exhausted, to form, in order to regenerate the filter 10, a new filter cartridge 12 comprising both a new microfiltration membrane 14b and a new powdered filter mass P of activated carbon, active and functioning, instead of those exhausted.

Finally, as a final operation, the user connects to the filter-holding head 11 the filter cartridge 12, containing the new microfiltration membrane 14b and the new dusty filtering mass P of activated carbon, both intact and working, so as to regenerate the filter 10 and prepare it to continue to filter correctly the water H₂O which is supplied by the external water supply mains to the same filter 10.

In this way, the filter 10 of the invention is regenerated in an ecologically sustainable manner and with respect to the environment with a minimum quantity of materials and a reduced number of parts to be disposed of, i.e. replacing only, after the use of the filter cartridge 12 and therefore the exhaustion of its filtering capacity, the microfiltration membrane 14b, together with the dust-filtering mass P, of activated carbon, contained in the bag 14a of the filtering apparatus 14.

For the sake of completeness, it should be noted that, in the previous description, it was conventionally assumed that the regeneration operations of the filter, once exhausted, are performed by a generic user, not necessarily specialized, with the consequent risk of producing special dangerous and hazardous waste, when instead in reality these operations must be compulsorily carried out by the manufacturer of the dusty filtering mass P and of the disposable microfiltering membrane 14b, or by specialized companies in the sector.

Therefore, this regenerable filter 10, intended to be promoted in the market under the name FILTEVER, advantageously combines, although not exclusively, the Pre-Coat filtering technology, developed by Everpure in the 1930s, based on a large surface microfiltration membrane and activated carbon in dusty form, and the current and modern requirements of ecological and recyclable filters such as to involve a reduced amount of materials and waste to be disposed of after use of the filter.

Moreover, according to a further aspect of the invention, advantageously the filtering cartridge 12, as essential part of the regenerable filter 10, is also compatible with the heads, connected to the water mains, of the filters currently offered on the market, so as to be able to update these existing and already in use filters.

In particular, the schematic perspective view of Fig. 6 shows how the quick coupling 13a of the container body 13, substantially cylindrical, of the filter cartridge 12 of the regenerable filter 10 of the invention, is compatible with the heads of the filters available and currently in use on the market, also provided as the filter-holder head 11 with an inlet for receiving the water to be filtered from an external water network and an outlet for delivering the water, once filtered, to a user, i.e. with an Omnipure head, indicated by 11-1, an Everpure head indicated by 11-2, a head 3M/Cuno indicated by 11-3, a Brita OLD header indicated by 11-4, a Brita NEW header indicated by 11-5, a BWT/W+M head by indicated 11-6.

Therefore, the filter cartridge 12 of this regenerable filter 10 of the invention is adapted to be provided in the form of a kit to be attached, as an alternative to conventional filter cartridges, to the heads 11-1, 11-2, ... , 11-6 of these filters currently available in the market, so as to update them.

### Circular economy background in which the filtering system of the invention is to be framed

As already anticipated the present invention should be suitably inserted and framed in a wider and more general context and system of circular economy, briefly illustrated below, background to the water filtration system, described above.

First of all, as a first consideration, it should be noted that most of the water filtration filters, currently offered and available on the market in the form of individual products and filtering units, for example in the form of removable cartridges, are of the so-called "disposable" type, that is, they are provided to be removed and disposed of integrally, once their filtering capacity has been exhausted after use, to be replaced with new intact filters and having the capacity to filter the water.

Only in very few cases is the container of the filtering units suitably reused to regenerate the filter, but these are marginal cases, since, as said, the current market is mainly constituted, i.e. 90-95%, from filtering units and similar products which incorporate and integrate in a single piece, which cannot be dismantled in its parts, both the container of the filtering medium and the filtering medium itself.

As a result, these disposable filters in most cases, both in the consumer and professional markets, do not follow any specific route of disposal to recover them in some way, as regards both the materials and the parts of which they are made, therefore these filters are usually disposed of within the system of the undifferentiated collection of waste.

It should also be considered that these "disposable" filters, used in the market, in particular to filter drinking water, at the end of their life cycle, varying on average from 3 to 12 months, end up directly in the bin of the undifferentiated collection of waste, also because in general these filters are not dangerous, thanks also to the regulations, although lacking and cumbersome, which has been set up in this concern, and also because it is very complicated if not impossible to separate the components and materials of which they are made.

Other factors currently opposing the creation of a specific and efficient recovery and reuse system, after use, of the materials and parts constituting these water filtration filters can be identified in the following:
- the main material with which these filters are made is a plastic material, therefore not very valuable;
- the waste produced, consisting of the parts and materials to be disposed of, of these filters, once cut and/or handled in some way, can change in category and be considered special waste, and therefore become more expensive to handle and manage;
- a high cost of handling, disposal and transport, borne by the end user, of these wastes produced by the parts and materials of these filters to be disposed of.

Therefore, as an alternative to the current situation and system which, as illustrated above, do not at least in general provide for recovering the materials and parts constituting the filters now in use and available on the market, so that they are almost always destined to be disposed of as unsorted waste, the present invention advantageously allows to recover and regenerate these filters in accordance with a concept and a context of circular economy according to which the materials and parts, of which the products offered and available on the market, are made, are not permanently abandoned and left unused after their operational life, but are instead reused and recycled so as to continue to circulate and to be used in the economic and productive activity of goods and products, in order to reduce waste and therefore meet the ecological and environmental requirements that are increasingly felt by the civil society.

For the sake of completeness, the diagram of Fig. 7 illustrates at section (a) the concept of circular economy to which the filtration system of the present invention is inspired and to be referred and compares it with the traditional concept of linear economy, illustrated at section (b) of the same Fig. 7.

More specifically, in the context of circular economy, as previously illustrated, the filtration system object of the invention appears to provide the following relevant advantages:
- the filtration system is designed and configured to minimize the amount of materials and parts to be disposed of, transported and recycled once these materials and parts have reached the end of their operating life;
- the containers of the regenerable filters, included in and essential part of the filtration system of the invention, are not definitively disposed of, once the respective filter has exhausted its autonomy and filtering capacity, but advantageously they continue to be reused in order to regenerate the respective filters several times, during a more or less long life according to the material, i.e. stainless steel, aluminium or plastic material, of which these containers are made, which, however, at the end of their life, are suitable for being disposed of and recycled with great ease;
- the materials and the parts, constituting the filtering means included in the filters, in addition to being easily separable from the respective filter, once they are exhausted and therefore have exhausted their filtering capacity, so as to be destined for final disposal and possibly for recycling and regeneration, are in any case a minimum part with respect to the totality of the materials and parts of the filter;
- there is obtained immediately, in addition to a system that instructs the personnel on how to separate the parts and the exhausted materials from the filters, also a virtuous system which provides the return of these parts and exhausted materials directly to the manufacturer for their final disposal and possibly their recycling, reuse and regeneration;
- the exhausted filtering means, which are disposed of, such as, for example, in the case of the Pre-Coat filtration technology, the filtering membrane and the dusty mass of activated carbon, or other exhausted filtering means, in the case of other filtration technologies, have considerably lower dimensions and weights, up to less than one third, than the waste, such as cartridges and disposable filters, which is disposed of in conventional systems, with evident advantages in the logistics and management of these filtering means to be disposed of once exhausted.

It is also noted, as a final consideration, that in the context of a circular economy, to which reference has been made, the filtration system of the invention could for example be structured and managed as follows:
- the manufacturer or distributor or retailer supplies the user of the regenerable filter 10 with the container body 13, made of stainless steel or aluminium or plastic, of the filter cartridge 12, provided with a suitable quick coupling 13a for rapidly and removably attaching such container body 13 to the filter-holding head 11, connected to the water supply network, wherein this container body 13 is also adapted to receive and stably attach the impermeable bag 14a containing the filtering medium, constituted for example, in the case of the Pre-Coat filtration technology, by the microfiltration membrane 14b and the dusty mass P of activated carbon, or another filtering medium, in the case of a different filtering technology;
- together with the container body 13 of the filter 10, a series of filtering apparatuses 14, for example two, are supplied to the respective user as a first equipment;
- the filtering apparatuses 14, supplied and supplied to the user of the filter 10 and each used only once, are then returned at the end of their operational life to their manufacturer, or to an authorized company, which recovers what is recoverable and reusable to regenerate them and to permanently dispose of what can no longer be recovered;
- of course the user of the filter 10, if he requires new waterproof bags 14a, without having before returned the worn ones that have reached the end of their life, will have to accept to bear a higher cost than if he had returned the worn bags to their manufacturer.

It is therefore clear from the description made that the present invention fully achieves the intended aim and objects, and in particular proposes a new and innovative filter, for the filtration of drinking water, in particular but not exclusively based on the Pre-Coat filtration technology, and a corresponding wider filtration system, wherein the filter is suitable to be advantageously regenerated, once its autonomy and filtering capacity have been exhausted, by removing from it only a minimum quantity of material and a reduced number of parts intended to be disposed of, in order to maintain and reuse a significant quantity of material and a considerable number of parts to form a new filter, regenerated, able to continue to filter the water flowing in the same filter.

In this context, the filter of the invention has the ability to guarantee, during the maintenance and replacement operations of the disposable filter medium, the highest standards of hygiene and preservation of the filter medium itself from microbiological contamination.

Again the filter, thanks to the fact that the disposable filter medium is contained in a soft, deformable and light casing, has the advantage of allowing easy and complete emptying of the water contained in this filter medium, once exhausted, so as to lighten it and prepare it to be eventually transferred and regenerated in the regeneration or disposal sites.

Finally, the filter allows easy and complete removal and replacement of the disposable filter medium, once it has exhausted its autonomy and filtering capacity, whatever the filtration technology adopted by the filter, therefore without any dispersion in the environment of the components that implement this filter filtration technology and therefore without generating hazardous special waste.

### Variants and further embodiments of the invention

Of course, without prejudice to the principle and basic concept of the present invention, it is also clear that its embodiments may be subject to variations, modifications and improvements with respect to what has been described and illustrated heretofore, without thereby departing from the scope of the invention itself.

For example, the connection system for removably and detachably connecting the connection element 14c of the filtering apparatus 14 to the upper edge or to the ring 14a' of the bag 14a, in order to allow the removal and detachment of the connection element 14c, to which the microfiltration membrane 14b is removably fixed, and therefore the replacement of the same microfiltration membrane 14b and of the dusty mass P, of activated carbon, once exhausted, with a new microfiltration membrane and a dusty mass, can be realized in a different way, although functionally equivalent, with respect to what has been described with reference to the embodiment 10 of the regenerable filter of the invention.

Also the connection and sealing system between the filter cartridge 12, the respective container 13 and the respective filtering apparatus 14, on the one hand, and the filter-holder head 11, on the other hand, in order to ensure a stable connection and a hermetic seal between the filter cartridge 12 and the filter-holder head 11, can be made in a different but functionally equivalent manner, with respect to what has been described with reference to the embodiment 10 of the regenerable filter of the invention, and for example comprising sealing means different from the sealing rings 14c" described for such embodiment 10.

For example, with reference to the variant shown in Fig. 5' and in Fig. 5A', in which for reasons of clarity the same numerical references of the preferred embodiment 10 of the filter of the invention are maintained, the connection element 14c, having the function of connecting the microfiltering membrane 14b, housed in the tubular bag 14a, to the same tubular bag 14a in a removable way, includes a sealing flange 14c', of plastic material, which can be hooked in a removable and detachable way, by means of an interlocking or threaded ring nut 14a', also of plastics, to a mechanical interlocking abutment or to an upper thread of the tubular bag 14a, wherein this sealing flange 14c' is associated with sealing rings 14c" able to allow to connect tightly and removably the filtering apparatus 14, included and contained in the filtering cartridge 12, to the filter holder head 11.

With regard to this variant illustrated in Fig. 5' and in Fig. 5A', it should be noted that the particular and special shape, of an irreversible type, of the mechanical joint or of the thread of the plastic ring nut 14a', causes that the removal and replacement of the microfiltering membrane and the dust mass can only and exclusively be carried out by the respective manufacturer or by authorized companies and not by the user of the filter, in order to avoid the risk of dispersion and production of special hazardous waste.

Furthermore, as already mentioned, the filtering apparatus 14, as essential part of the regenerable filter 10 of the invention, housed in the container 13 of the filtering cartridge 12, can be configured to filter the water H₂O, fed by the external water network, which flows into the same filter 10, as well as in accordance with the Pre-Coat filtering technology, above described, on the use of a microfiltration membrane with a large filtration surface, associated with and cooperating with a mass of activated carbon powder, also with a different and alternative filtration technology.

In this connection, the diagram of Figure 6a shows some of these possible filtration technologies, of which the description is omitted, being widely known to those skilled in the art, on the basis of which the filtering apparatus housed in the container body 13 of the regenerable filter 10 of the invention can operate, wherein these various filtration technologies are indicated as follows:
- 14 Pre-Coat technology;
- 14-1 carbon block compacted activated carbon;
- 14-2 GAC granular activated carbon;
- 14-3 depth filtration with melt blown polypropylene;
- 14-4 depth filtration with wound synthetic thread;
- 14-5 surface filtration with membrane or synthetic or metallic mesh;
- 14-6 chemical/physical treatment with ion exchange resins;
- 14-7 ultrafiltration with membrane or hollow fiber.

Further, up to here reference has been made to the use of the filter 10 of the invention to filter water H₂O.

It is clear, however, that the filter can also be advantageously used to filter other liquids, and in general food liquids and similar liquids.

## Claims

1. Regenerable filter (10), for filtering water (H2O) and in general a drinkable liquid, comprising:
- a filter holder head (11) suitable for being permanently connected to a water supply network (H2O) or similar supply means; and
- a consumable component, associated with the filter holder head (11), consisting of a filtering cartridge (12);
wherein the filter holder head (11) comprises an inlet (11a) to receive from the water supply network the water (H2O) to be filtered and an outlet (11b) to deliver the water (H2O), once filtered by the filtering cartridge (12), to a user;
wherein the filtering cartridge (12) in turn comprises:
- a container body (13); and
- a filtering apparatus (14), housed in the container body (13), designed to filter the water (H2O) fed by the respective supply network to the filter (10);
wherein the filtering apparatus (14), included in the filtering cartridge (12), is configured to filter the water (H2O) by the so-called Pre-Coat filtration technology;
wherein the container body (13), in particular of stainless steel or aluminium or plastic material, which houses the filtering apparatus (14) of the filtering cartridge (12), has a substantially cylindrical shape, shaped like a cup, and is equipped at one end with a quick coupling (13a), hermetically sealed, to attach and connect in a quick and removable way the filtering cartridge (12) to the filter holder head (11), in turn connected to the water supply network (H2O);
wherein the filtering apparatus (14), included in the filtering cartridge (12), comprises, in order to implement said Pre-Coat filtration technology:
- a bag (14a), impermeable, exhibiting a tubular shape, made of a soft and deformable material, for example plastic material or plastic material and aluminium;
- a filtering medium (14b, P), contained in the bag (14a), comprising a microfiltering membrane (14b), with a large filtration surface, and a dusty mass (P) of activated carbon, associated and able to cooperate with the microfiltering membrane (14b), on the basis of said Pre-Coat filtration technology, to filter the water (H2O) flowing into the regenerable filter (10);
- a connection element (14c) for connecting in a removable and detachable manner the microfiltering membrane (14b), contained in the tubular bag (14a), to the same tubular bag (14a); and
- a non-return valve (14d), as required by law, housed in the bag (14a) and connected via a supply duct (14e) to the inlet (11a) of the filter holder head (11), said non-return valve (14d) being designed to receive, through said supply duct (14e), the water (H2O) flowing in the filter (10) and in the filtering apparatus (14) and to prevent it from returning to the respective supply network;
wherein the filtering apparatus (14) is adapted to retain the dusty mass (P) of activated carbon inside the bag (14a) and to allow its removal from the filter (10) together with the microfiltering membrane (14b), when the filtering cartridge (12), once its filtering capacity has been exhausted, is disconnected from the filter holder head (11) in order to regenerate the filter (10);
whereby the microfiltering membrane (14b) and the dusty mass (P) of activated carbon, contained in the bag (14a), are intended to be disposed of, once their autonomy and filtering capacity are exhausted, after the use of the filtering cartridge (12);
wherein both the container body (13) of the filtering cartridge (12) and the tubular bag (14a), the connection element (14c), the non-return valve (14d) and the respective supply duct (14e) of the filtering apparatus (14) included in the filtering cartridge (12) are instead intended to be kept in the filter (10) and to be reused, after the use of the filtering cartridge (12), that is once the respective filtering capacity has been exhausted, to form, in order to regenerate the filter (10), a new filtering cartridge comprising a new microfiltering membrane and a new dusty mass (P) of activated carbon to replace the exhausted ones;
whereby the filter (10) is suitable for being regenerated in an eco-sustainable way and with a minimum quantity of materials and a minimum number of parts to be disposed of, that is by replacing, after use of the filtering cartridge (12) and therefore the exhaustion of its autonomy and filtering capacity, only the microfiltering membrane (14b) and the dusty mass (P) of activated carbon contained in the bag (14a); and
wherein said connection element (14c) of the filtering apparatus (14) of the filtering cartridge (12) in turn includes.
- a sealing flange (14c'), to connect in a removable and detachable way the microfiltering membrane (14b), contained in the tubular bag (14a), to an end edge (14a') of the same tubular bag (14a), so as to allow the removal of the microfiltering membrane (14b), one exhausted, and its replacement with a new microfiltering membrane; and
- one or more sealing rings (14c") to connect, in a sealed and in a removable and detachable way, the filtering apparatus (14), included in the filtering cartridge (12) and housed in the container body (13), to the filter holder head (11).

2. System for the filtration of drinking water (H2O) operating in a context of circular economy, including:
- a plurality of regenerable filters (10), connected to a water supply network (H2O) or to similar supply means and configured to filter water (H2O) and in general a liquid to drink by the so-called Pre-Coat filtration technology, wherein each of said regenerable filters (10) is conforming to claim 1.

3. Updating kit or group to update a filter, already installed, wherein said filter already installed includes:
- a filter holder head (11-1, 11-2. 11-3), permanently connected to a water supply network (H2O) or similar supply means, having an inlet (11a) for receiving from the water supply network (H2O) the water to be filtered and an outlet (11b) to deliver the water (H2O), once filtered by the filter, to a user;
wherein said kit includes:
- a consumable component, connectable to said filter holder head (11-1, 11-2, 11-3) and consisting of a filtering cartridge (12) in turn comprising:
- a container body (13); and
- a filtering apparatus (14), housed in the container body (13), designed to filter the water (H2O) fed by the respective supply network to the filter to be regenerated;
wherein the filtering apparatus (14), included in the filtering cartridge (12), is configured to filter the water (H2O) based on the so-called Pre-Coat filtration technology;
wherein the container body (13) is suitable for being reused after the use of the filtering cartridge (12), that is once the respective filtering capacity has been exhausted, to receive and house a new filtering apparatus in order to regenerate the filter;
wherein the container body (13), in particular of stainless steel or aluminium or plastic material, which houses the filtering apparatus (14) of the filtering cartridge (12), has a substantially cylindrical shape, shaped like a cup, and is equipped at one end with a quick coupling (13a), hermetically sealed, to attach and connect in a quick and removable way the filtering cartridge (12) to the filter holder head (11-1, 11-2, 11-3), in turn connected to the water supply network (H2O);
wherein the filtering apparatus (14), included in the filtering cartridge (12) of the kit, comprises, in order to implement said Pre-Coat filtration technology:
- a bag (14a), impermeable, exhibiting a tubular shape, made of a soft and deformable material, for example plastic material or plastic material and aluminium;
- a filtering medium (14b), contained in the bag (14a), comprising a microfiltering membrane (14b), with a large filtration surface, and a dusty mass (P) of activated carbon, associated and able to cooperate with the microfiltering membrane (14b), on the basis of said Pre-Coat filtration technology, to filter the water (H2O) flowing into the filter to be updated;
- a connection element (14c), including a sealing flange (14c'), to connect in a removable way the microfiltering membrane (14b), contained in the tubular bag (14a), to an end edge (14a') of the same tubular bag (14a); and
- a non-return valve (14d), as required by law, housed in the bag (14a) and connected via a supply duct (14e) to the inlet (11a) of the filter holder head (11-1, 11 -2, 11-3), said non-return valve (14d) being designed to receive, through said supply duct (14e), the water (H2O) that flows in the filter (10) and in the filtering apparatus (14) and to prevent it from returning to the respective power supply network;
wherein the filtering apparatus (14) is configured to retain the dusty mass (P) of activated carbon inside the bag (14a) and to allow its removal from the filter together with the microfiltering membrane (14b), when the filtering cartridge (12) of the kit, once its filtering capacity has been exhausted, it is disconnected from the filter holder head (11-1, 11-2, 11-3) of the filter;
whereby the microfiltering membrane (14b) and the dusty mass (P) of activated carbon, contained in the bag (14a), are intended to be disposed of, once their autonomy and filtering capacity have been exhausted, after the use of the filtering cartridge (12);
wherein both the container body (13) of the filtering cartridge (12) and the tubular bag (14a), the connection element (14c), the non-return valve (14d) and the respective supply duct (14e) of the filtering apparatus (14) included in the filtering cartridge (12) are instead intended to be kept in the filter and be reused, after the use of the filtering cartridge (12), that is once the respective filtering capacity has been exhausted, to form, in order to regenerate the filter, a new filtering cartridge comprising a new microfiltering membrane and a new dusty mass (P) of activated carbon to replace the exhausted ones;
whereby the filter, already installed, is updated in an eco-sustainable way so as to imply in the use a minimum quantity of materials and a minimum number of parts to be disposed of, that is to imply, after the use of the filtering cartridge (12) and therefore the exhaustion of its autonomy and filtering capacity, only the replacement of the microfiltering membrane (14b) and of the dusty mass (P) of activated carbon contained in the bag (14a); and
wherein said microfiltering membrane (14b), included in the filtering apparatus (14) of the filtering cartridge (12) of the kit, is attached in a removable and detachable way to the sealing flange (14c') of said connection element (14c), in order to allow the removal and detachment of the same microfiltering membrane (14b), once exhausted, and its replacement with a new microfiltering membrane.

## Patentansprüche

1. Regenerierbarer Filter (10) zum Filtern von Wasser (H2O) und allgemein einer trinkbaren Flüssigkeit, umfassend:
- einen Filterhalterkopf (11), der geeignet ist, permanent an einem Wasserversorgungsnetz (H2O) oder einem ähnlichen Versorgungsmittel angeschlossen zu sein; und
- eine Verbrauchsmaterialkomponente, die mit dem Filterhalterkopf (11) assoziiert ist, bestehend aus einer Filterpatrone (12);
wobei der Filterhalterkopf (11) einen Einlass (11a), um das zu filternde Wasser (H2O) aus dem Wasserversorgungsnetz zu empfangen, und einen Auslass (11b) umfasst, um das Wasser (H2O), sobald von der Filterpatrone (12) gefiltert, an einen Benutzer abzugeben;
wobei die Filterpatrone (12) wiederum Folgendes umfasst:
- ein Behälterkörper (13); und
- eine Filtereinrichtung (14), die in dem Behälterkörper (13) beherbergt ist, konzipiert, um das Wasser (H2O) zu filtern, das dem Filter (10) von dem jeweiligen Versorgungsnetz zugeführt wird;
wobei die in der Filterkartusche (12) eingeschlossene Filtereinrichtung (14) konfiguriert ist, um das Wasser (H2O) durch die sogenannte Anschwellfiltrationstechnologie zu filtern;
wobei der Behälterkörper (13), insbesondere aus Edelstahl oder Aluminium oder Kunststoffmaterial, der die Filtereinrichtung (14) der Filterpatrone (12) beherbergt, eine im Wesentlichen zylindrische Form, geformt wie ein Becher, aufweist und an einem Ende mit einer hermetisch abgedichteten Schnellkupplung (13a) ausgestattet ist, um die Filterpatrone (12) schnell und auf entfernbare Weise an dem Filterhalterkopf (11) zu befestigen und anzuschließen, der wiederum an das Wasserversorgungsnetz (H2O) angeschlossen ist;
wobei die in der Filterpatrone (12) eingeschlossene Filtereinrichtung (14) Folgendes umfasst, um die Anschwellfiltrationstechnologie zu implementieren:
- einen undurchlässigen Beutel (14a), hergestellt aus einem weichem und verformbarem Material, beispielsweise Kunststoffmaterial oder Kunststoffmaterial und Aluminium, der eine röhrenförmige Form vorweist;
- ein Filtermedium (14b, P), das in dem Beutel (14a) enthalten ist, umfassend eine Mikrofiltermembran (14b) mit einer großen Filtrationsoberfläche und eine staubige Masse (P) aus Aktivkohle, die mit der Mikrofiltermembran (14b) assoziiert und auf der Grundlage der Anschwellfiltrationstechnologie fähig ist, mit dieser zusammenzuwirken, um das in den regenerierbaren Filter (10) fließende Wasser (H2O) zu filtern;
- ein Anschlusselement (14c) zum Anschließen der in dem röhrenförmigen Beutel (14a) enthaltenen Mikrofiltermembran (14b) an den gleichen röhrenförmigen Beutel (14a) auf eine entfernbare und abnehmbare Art und Weise; und
- ein Rückschlagventil (14d), wie gesetzlich vorgeschrieben, das in dem Beutel (14a) beherbergt und über einen Versorgungskanal (14e) an den Einlass (11a) des Filterhalterkopfes (11) angeschlossen ist, wobei das Rückschlagventil (14d) konzipiert ist, um durch den Versorgungskanal (14e) das in dem Filter (10) und in der Filtereinrichtung (14) fließende Wasser (H2O) aufzunehmen und um zu verhindern, dass es in das jeweilige Versorgungsnetz zurückkehrt;
wobei die Filtereinrichtung (14) angepasst ist, um die staubige Masse (P) aus Aktivkohle im Inneren des Beutels (14a) zurückzuhalten und deren Entfernung aus dem Filter (10) zusammen mit der Mikrofiltermembran (14b) zu erlauben, wenn die Filterpatrone (12), sobald ihre Filterkapazität erschöpft wurde, von dem Filterhalterkopf (11) getrennt wird, um den Filter (10) zu regenerieren;
wobei die Mikrofiltermembran (14b) und die staubige Masse (P) aus Aktivkohle, die in dem Beutel (14a) enthalten sind, entsorgt werden sollen, sobald ihre Autonomie und Filterkapazität nach der Verwendung der Filterpatrone (12) erschöpft sind;
wobei sowohl der Behälterkörper (13) der Filterpatrone (12) als auch der röhrenförmige Beutel (14a), das Anschlusselement (14c), das Rückschlagventil (14d) und der jeweilige Versorgungskanal (14e) der in der Filterpatrone (12) eingeschlossenen Filtereinrichtung (14) stattdessen dazu bestimmt sind, in dem Filter (10) gehalten zu werden und nach der Verwendung der Filterpatrone (12), das heißt, sobald die jeweilige Filterkapazität erschöpft wurde, wiederverwendet zu werden, um den Filter (10) zu regenerieren, um eine neue Filterpatrone zu bilden, die eine neue Mikrofiltermembran und eine neue staubige Masse (P) aus Aktivkohle umfasst, um die erschöpften zu ersetzen;
wobei der Filter (10) geeignet ist, um auf eine ökologisch nachhaltige Weise und mit einer minimalen Quantität an Materialien und einer minimalen Anzahl an zu entsorgenden Teilen regeneriert zu werden, das heißt, durch Ersetzen, nach Verwendung der Filterpatrone (12) und daher der Erschöpfung ihrer Autonomie und Filterkapazität, nur der Mikrofiltermembran (14b) und der in dem Beutel (14a) enthaltenen staubigen Masse (P) aus Aktivkohle; und
wobei das Anschlusselement (14c) der Filtereinrichtung (14) der Filterpatrone (12) wiederum Folgendes einschließt:
- einen Dichtungsflansch (14c'), um die in dem röhrenförmigen Beutel (14a) enthaltene Mikrofiltermembran (14b) auf eine entfernbare und abnehmbare Weise an einen Endrand (14a') des gleichen röhrenförmigen Beutels (14a) anzuschließen, um die Entfernung der Mikrofiltermembran (14b), sobald erschöpft, und deren Ersatz mit einer neuen Mikrofiltermembran zu erlauben; und
- einen oder mehrere Dichtungsringe (14c''), um die in der Filterpatrone (12) eingeschlossene und in dem Behälterkörper (13) beherbergte Filtereinrichtung (14) auf eine dichte und auf eine entfernbare und abnehmbaren Weise mit dem Filterhalterkopf (11) zu verbinden.

2. System für die Filtration von Trinkwasser (H2O), das in einem Kontext der Kreislaufwirtschaft betrieben wird, einschließlich:
- einer Vielzahl von regenerierbaren Filtern (10), die an ein Wasserversorgungsnetz (H2O) oder ähnliche Versorgungsmittel angeschlossen und konfiguriert sind, um Wasser (H2O) und allgemein eine Flüssigkeit zum Trinken durch die sogenannte Anschwellfiltrationstechnologie zu filtern, wobei jeder der regenerierbaren Filter (10) Anspruch 1 entspricht.

3. Aufrüstungskit oder -gruppe, um einen bereits installierten Filter aufzurüsten, wobei der bereits installierte Filter Folgendes einschließt:
- einen Filterhalterkopf (11-1, 11-2, 11-3), der permanent an ein Wasserversorgungsnetz (H2O) oder ähnliche Versorgungsmittel angeschlossen ist, mit einem Einlass (11a) zum Empfangen des zu filternden Wassers aus dem Wasserversorgungsnetz (H2O) und einem Auslass (11b), um das von dem Filter gefilterte Wasser (H2O) an einen Benutzer abzugeben;
wobei das Kit Folgendes einschließt:
- eine Verbrauchsmaterialkomponente, die an den Filterhalterkopf (11-1, 11-2, 11-3) anschließbar ist und bestehend aus einer Filterpatrone (12), die wiederum Folgendes umfasst:
- ein Behälterkörper (13); und
- eine Filtereinrichtung (14), die in dem Behälterkörper (13) beherbergt ist, konzipiert, um das Wasser (H2O) zu filtern, das dem zu regenerierenden Filter von dem jeweiligen Versorgungsnetz zugeführt wird;
wobei die in der Filterkartusche (12) eingeschlossene Filtereinrichtung (14) konfiguriert ist, um das Wasser (H2O) basierend auf der sogenannten Anschwellfiltrationstechnologie zu filtern;
wobei der Behälterkörper (13) nach der Verwendung der Filterpatrone (12) zur Wiederverwendung geeignet ist, das heißt, sobald die jeweilige Filterkapazität erschöpft wurde, um eine neue Filtereinrichtung aufzunehmen und zu beherbergen, um den Filter zu regenerieren;
wobei der Behälterkörper (13), insbesondere aus Edelstahl oder Aluminium oder Kunststoffmaterial, der die Filtereinrichtung (14) der Filterpatrone (12) beherbergt, eine im Wesentlichen zylindrische Form, geformt wie ein Becher, aufweist und an einem Ende mit einer hermetisch abgedichteten Schnellkupplung (13a) ausgestattet ist, um die Filterpatrone (12) schnell und auf entfernbare Weise an dem Filterhalterkopf (11-1, 11-2, 11-3) zu befestigen und anzuschließen, der wiederum an das Wasserversorgungsnetz (H2O) angeschlossen ist;
wobei die in der Filterpatrone (12) des Kits eingeschlossene Filtereinrichtung (14), um die Anschwellfiltrationstechnologie zu implementieren, Folgendes umfasst:
- einen undurchlässigen Beutel (14a), hergestellt aus einem weichem und verformbarem Material, beispielsweise Kunststoffmaterial oder Kunststoffmaterial und Aluminium, der eine röhrenförmige Form vorweist;
- ein Filtermedium (14b), das in dem Beutel (14a) enthalten ist, umfassend eine Mikrofiltermembran (14b) mit einer großen Filtrationsoberfläche und eine staubige Masse (P) aus Aktivkohle, die mit der Mikrofiltermembran (14b) assoziiert und auf der Grundlage der Anschwellfiltrationstechnologie fähig ist, mit dieser zusammenzuwirken, um das in den aufzurüstenden Filter fließende Wasser (H2O) zu filtern;
- ein Anschlusselement (14c) einschließlich eines Dichtungsflansches (14c'), um die in dem röhrenförmigen Beutel (14a) enthaltene Mikrofiltermembran (14b) an einen Endrand (14a') des gleichen röhrenförmigen Beutels (14a) auf eine entfernbare Weise anzuschließen; und
- ein Rückschlagventil (14d), wie gesetzlich vorgeschrieben, das in dem Beutel (14a) beherbergt und über einen Versorgungskanal (14e) an den Einlass (11a) des Filterhalterkopfes (11-1, 11-2, 11-3) angeschlossen ist, wobei das Rückschlagventil (14d) konzipiert ist, um durch den Versorgungskanal (14e) das in dem Filter (10) und in der Filtereinrichtung (14) fließende Wasser (H2O) aufzunehmen und um zu verhindern, dass es in das jeweilige Versorgungsnetz zurückkehrt;
wobei die Filtereinrichtung (14) konfiguriert ist, um die staubige Masse (P) aus Aktivkohle im Inneren des Beutels (14a) zurückzuhalten und deren Entfernung aus dem Filter zusammen mit der Mikrofiltermembran (14b) zu erlauben, wenn die Filterpatrone (12) des Kits, sobald ihre Filterkapazität erschöpft wurde, von dem Filterhalterkopf (11-1, 11-2, 11-3) des Filters getrennt wird;
wobei die Mikrofiltermembran (14b) und die staubige Masse (P) aus Aktivkohle, die in dem Beutel (14a) enthalten sind, entsorgt werden sollen, sobald ihre Autonomie und Filterkapazität nach der Verwendung der Filterpatrone (12) erschöpft wurden;
wobei sowohl der Behälterkörper (13) der Filterpatrone (12) als auch der röhrenförmige Beutel (14a), das Anschlusselement (14c), das Rückschlagventil (14d) und der jeweilige Versorgungskanal (14e) der in der Filterpatrone (12) eingeschlossenen Filtereinrichtung (14) stattdessen dazu bestimmt sind, in dem Filter gehalten zu werden und nach der Verwendung der Filterpatrone (12), das heißt, sobald die jeweilige Filterkapazität erschöpft wurde, wiederverwendet zu werden, um den Filter zu regenerieren, um eine neue Filterpatrone zu bilden, die eine neue Mikrofiltermembran und eine neue staubige Masse (P) aus Aktivkohle umfasst, um die erschöpften zu ersetzen;
wobei der bereits installierte Filter auf eine ökologisch nachhaltige Weise aufgerüstet wird, um eine minimale Quantität an Materialien und eine minimale Anzahl an zu entsorgenden Teilen zu beinhalten, das heißt, nach der Verwendung der Filterpatrone (12) und daher der Erschöpfung ihrer Autonomie und Filterkapazität nur den Ersatz der Mikrofiltermembran (14b) und der in dem Beutel (14a) enthaltenen staubige Masse (P) aus Aktivkohle zu beinhalten; und
wobei die in der Filtereinrichtung (14) der Filterpatrone (12) des Kits eingeschlossene Mikrofiltermembran (14b) auf eine entfernbare und abnehmbare Weise an dem Dichtungsflansch (14c') des Anschlusselements (14c) befestigt ist, um die Entfernung und Ablösung der gleichen Mikrofiltermembran (14b), sobald erschöpft, und ihren Ersatz mit einer neuen Mikrofiltermembran zu erlauben.

## Revendications

1. Filtre régénérable (10), pour filtrer de l'eau (H2O) et en général un liquide potable, comprenant :
- une tête de porte-filtre (11) adaptée pour être connectée en permanence à un réseau d'alimentation en eau (H2O) ou à un moyen d'alimentation similaire ; et
- un composant consommable, associé à la tête de porte-filtre (11), constitué d'une cartouche filtrante (12) ;
dans lequel la tête de porte-filtre (11) comprend une entrée (11a) pour recevoir du réseau d'alimentation en eau l'eau (H2O) à filtrer et une sortie (11b) pour distribuer l'eau (H2O), une fois filtrée par la cartouche filtrante (12), à un utilisateur ;
dans lequel la cartouche filtrante (12) comprend à son tour :
- un corps de récipient (13) ; et
- un appareil de filtration (14), logé dans le corps de récipient (13), conçu pour filtrer l'eau (H2O) alimentée par le réseau d'alimentation respectif au filtre (10) ;
dans lequel l'appareil de filtration (14), inclus dans la cartouche filtrante (12), est configuré pour filtrer l'eau (H2O) par la technologie de filtrage dite Pre-Coat ;
dans lequel le corps de récipient (13), en particulier en acier inoxydable, en aluminium ou en matière plastique, qui loge l'appareil de filtration (14) de la cartouche filtrante (12), présente une forme sensiblement cylindrique, en forme de tasse, et est équipé à une extrémité d'un raccord rapide (13a), hermétiquement scellé, pour fixer et connecter de manière rapide et amovible la cartouche filtrante (12) à la tête de porte-filtre (11), à son tour connectée au réseau d'alimentation en eau (H2O) ;
dans lequel l'appareil de filtration (14), inclus dans la cartouche filtrante (12), comprend, afin de mettre en œuvre ladite technologie de filtration Pre-Coat :
- un sac (14a), imperméable, de forme tubulaire, réalisé en un matériau souple et déformable, par exemple en matière plastique ou en matière plastique et aluminium ;
- un milieu filtrant (14b, P), contenu dans le sac (14a), comprenant une membrane de microfiltration (14b), avec une grande surface de filtration, et une masse poussiéreuse (P) de charbon actif, associée et capable de coopérer avec la membrane de microfiltration (14b), sur la base de ladite technologie de filtration Pre-Coat, pour filtrer l'eau (H2O) s'écoulant dans le filtre régénérable (10) ;
- un élément de connexion (14c) permettant de connecter de manière amovible et détachable la membrane de microfiltration (14b), contenue dans le sac tubulaire (14a), au même sac tubulaire (14a) ; et
- un clapet anti-retour (14d), comme requis par la loi, logé dans le sac (14a) et connectée via un conduit d'alimentation (14e) à l'entrée (11a) de la tête de porte-filtre (11), ledit clapet anti-retour (14d) étant conçu pour recevoir, par ledit conduit d'alimentation (14e), l'eau (H2O) s'écoulant dans le filtre (10) et dans l'appareil de filtration (14) et pour l'empêcher de retourner dans le réseau d'alimentation respectif ;
dans lequel l'appareil de filtration (14) est adapté pour retenir la masse poussiéreuse (P) de charbon actif à l'intérieur du sac (14a) et pour permettre son retrait du filtre (10) avec la membrane de microfiltration (14b), lorsque la cartouche filtrante (12), une fois sa capacité de filtration épuisée, est déconnectée de la tête de porte-filtre (11) afin de régénérer le filtre (10) ;
selon lequel la membrane de microfiltration (14b) et la masse poussiéreuse (P) de charbon actif, contenue dans le sac (14a), sont destinées à être éliminées, une fois leur autonomie et leur capacité de filtration épuisées, après l'utilisation de la cartouche filtrante (12) ;
dans lequel le corps de récipient (13) de la cartouche filtrante (12) et le sac tubulaire (14a), l'élément de connexion (14c), le clapet anti-retour (14d) et le conduit d'alimentation respectif (14e) de l'appareil de filtration (14) inclus dans la cartouche filtrante (12) sont plutôt destinés à être conservés dans le filtre (10) et à être réutilisés, après l'utilisation de la cartouche filtrante (12), c'est-à-dire une fois que la capacité de filtration respective a été épuisée, pour former, afin de régénérer le filtre (10), une nouvelle cartouche filtrante comprenant une nouvelle membrane de microfiltration et une nouvelle masse poussiéreuse (P) de charbon actif pour remplacer les cartouches filtrantes épuisées ;
selon lequel le filtre (10) est apte à être régénéré de manière éco-durable et avec une quantité minimale de matériaux et un nombre minimal de pièces à éliminer, c'est-à-dire en remplaçant, après utilisation de la cartouche filtrante (12) et donc épuisement de son autonomie et de sa capacité de filtration, uniquement la membrane de microfiltration (14b) et la masse poussiéreuse (P) de charbon actif contenue dans le sac (14a) ; et
dans lequel ledit élément de connexion (14c) de l'appareil de filtration (14) de la cartouche filtrante (12) inclut à son tour :
- une bride d'étanchéité (14c'), pour connecter de manière amovible et détachable la membrane de microfiltration (14b), contenue dans le sac tubulaire (14a), à un bord d'extrémité (14a') du même sac tubulaire (14a), de manière à permettre le retrait de la membrane de microfiltration (14b), une fois épuisée, et son remplacement par une nouvelle membrane de microfiltration ; et
- un ou plusieurs anneaux d'étanchéité (14c'') pour connecter, de manière étanche et amovible, l'appareil de filtration (14), inclus dans la cartouche filtrante (12) et logé dans le corps de récipient (13), à la tête de porte-filtre (11).

2. Système de filtration d'eau potable (H2O) fonctionnant dans un contexte d'économie circulaire, incluant :
- une pluralité de filtres régénérables (10), connectés à un réseau d'alimentation en eau (H2O) ou à des moyens d'alimentation similaires et configurés pour filtrer l'eau (H2O) et en général un liquide potable par la technologie de filtration dite Pre-Coat, dans lequel chacun desdits filtres régénérables (10) est conforme à la revendication 1.

3. Kit ou groupe de mise à jour pour mettre à jour un filtre déjà installé, dans lequel ledit filtre déjà installé inclut :
- une tête de porte-filtre (11-1, 11-2, 11-3), connectée en permanence à un réseau d'alimentation en eau (H2O) ou à un moyen d'alimentation similaire, présentant une entrée (11a) pour recevoir du réseau d'alimentation en eau (H2O) l'eau à filtrer et une sortie (11b) pour distribuer l'eau (H2O), une fois filtrée par le filtre, à un utilisateur ;
dans lequel ledit kit inclut :
- un composant consommable, connectable à ladite tête de porte-filtre (11-1, 11-2, 11-3) et constitué d'une cartouche filtrante (12) comprenant à son tour :
- un corps de récipient (13) ; et
- un appareil de filtration (14), logé dans le corps de récipient (13), conçu pour filtrer l'eau (H2O) alimentée par le réseau d'alimentation respectif au filtre à régénérer ;
dans lequel l'appareil de filtration (14), inclus dans la cartouche filtrante (12), est configuré pour filtrer l'eau (H2O) sur la base de la technologie de filtration dite Pre-Coat ;
dans lequel le corps de récipient (13) est adapté pour être réutilisé après l'utilisation de la cartouche filtrante (12), c'est-à-dire une fois que la capacité de filtration respective a été épuisée, pour recevoir et loger un nouvel appareil de filtration afin de régénérer le filtre ;
dans lequel le corps de récipient (13), en particulier en acier inoxydable, en aluminium ou en matière plastique, qui loge l'appareil de filtration (14) de la cartouche filtrante (12), présente une forme sensiblement cylindrique, en forme de tasse, et est équipé à une extrémité d'un raccord rapide (13a), hermétiquement scellé, pour fixer et connecter de manière rapide et amovible la cartouche filtrante (12) à la tête de porte-filtre (11-1, 11-2, 11-3), à son tour connectée au réseau d'alimentation en eau (H2O) ;
dans lequel l'appareil de filtration (14), inclus dans la cartouche filtrante (12) du kit, comprend, afin de mettre en œuvre ladite technologie de filtration Pre-Coat :
- un sac (14a), imperméable, de forme tubulaire, réalisé en un matériau souple et déformable, par exemple en matière plastique ou en matière plastique et aluminium ;
- un milieu filtrant (14b), contenu dans le sac (14a), comprenant une membrane de microfiltration (14b), avec une grande surface de filtration, et une masse poussiéreuse (P) de charbon actif, associée et capable de coopérer avec la membrane de microfiltration (14b), sur la base de ladite technologie de filtration Pre-Coat, pour filtrer l'eau (H2O) s'écoulant dans le filtre à mettre à jour ;
- un élément de connexion (14c), incluant une bride d'étanchéité (14c'), pour connecter de manière amovible la membrane de microfiltration (14b), contenue dans le sac tubulaire (14a), à un bord d'extrémité (14a') du même sac tubulaire (14a) ; et
- un clapet anti-retour (14d), comme requis par la loi, logé dans le sac (14a) et connectée via un conduit d'alimentation (14e) à l'entrée (11a) de la tête de porte-filtre (11-1, 11-2, 11-3), ledit clapet anti-retour (14d) étant conçu pour recevoir, par ledit conduit d'alimentation (14e), l'eau (H2O) qui s'écoule dans le filtre (10) et dans l'appareil de filtration (14) et pour l'empêcher de retourner dans le réseau d'alimentation respectif ;
dans lequel l'appareil de filtration (14) est configuré pour retenir la masse poussiéreuse (P) de charbon actif à l'intérieur du sac (14a) et pour permettre son retrait du filtre avec la membrane de microfiltration (14b), lorsque la cartouche filtrante (12) du kit, une fois sa capacité de filtration épuisée, est déconnectée de la tête de porte-filtre (11-1, 11-2, 11-3) du filtre ;
selon lequel la membrane de microfiltration (14b) et la masse poussiéreuse (P) de charbon actif, contenue dans le sac (14a), sont destinées à être éliminées, une fois leur autonomie et leur capacité de filtration ayant été épuisées, après l'utilisation de la cartouche filtrante (12) ;
dans lequel le corps de récipient (13) de la cartouche filtrante (12) et le sac tubulaire (14a), l'élément de connexion (14c), le clapet anti-retour (14d) et le conduit d'alimentation respectif (14e) de l'appareil de filtration (14) inclus dans la cartouche filtrante (12) sont plutôt destinés à être conservés dans le filtre et être réutilisés, après l'utilisation de la cartouche filtrante (12), c'est-à-dire une fois que la capacité de filtration respective a été épuisée, pour former, afin de régénérer le filtre, une nouvelle cartouche filtrante comprenant une nouvelle membrane de microfiltration et une nouvelle masse poussiéreuse (P) de charbon actif pour remplacer les cartouches filtrantes épuisées ;
selon lequel le filtre, déjà installé, est mis à jour de manière éco-durable afin d'impliquer une quantité minimale de matériaux et un nombre minimal de pièces à éliminer, c'est-à-dire qu'après l'utilisation de la cartouche filtrante (12) et donc l'épuisement de son autonomie et de sa capacité de filtration, il ne faut remplacer que la membrane de microfiltration (14b) et la masse poussiéreuse (P) de charbon actif contenue dans le sac (14a) ; et
dans lequel ladite membrane de microfiltration (14b), incluse dans l'appareil de filtration (14) de la cartouche filtrante (12) du kit, est fixée de manière amovible et détachable à la bride d'étanchéité (14c') dudit élément de connexion (14c), afin de permettre le retrait et le détachement de la même membrane de microfiltration (14b), une fois épuisée, et son remplacement par une nouvelle membrane de microfiltration.
